Europäisches Patentamt

European Patent Office

Office européen des brevets

(19)

(11) **EP 0 734 502 B1**

(12)

# FASCICULE DE BREVET EUROPEEN

(45) Date de publication et mention
de la délivrance du brevet:
**04.03.1998 Bulletin 1998/10**

(21) Numéro de dépôt: **95903844.9**

(22) Date de dépôt: **16.12.1994**

(51) Int Cl.6: **F21V 8/00**

(86) Numéro de dépôt international:
**PCT/FR94/01475**

(87) Numéro de publication internationale:
**WO 95/16877 (22.06.1995 Gazette 1995/26)**

(54) **FIBRE OPTIQUE A ECLAIRAGE LATERAL MULTI-PONCTUEL**

OPTISCHE FASER FÜR SEITLICHE MEHRPUNKTBELEUCHTUNG

OPTICAL FIBRE WITH MULTIPLE POINT LATERAL ILLUMINATION

(84) Etats contractants désignés:
**AT BE CH DE DK ES FR GB GR IE IT LI LU MC NL
PT SE**

(30) Priorité: **17.12.1993 FR 9315401**

(43) Date de publication de la demande:
**02.10.1996 Bulletin 1996/40**

(73) Titulaires:
• **Bernasson, André**
  **63500 Les Pradeaux (FR)**
• **Vergne, Hubert**
  **42600 Champdieu (FR)**

(72) Inventeurs:
• **Bernasson, André**
  **63500 Les Pradeaux (FR)**
• **Vergne, Hubert**
  **42600 Champdieu (FR)**

(74) Mandataire: **Chanet, Jacques**
**56, avenue de Royat**
**B.P. 27**
**63401 Chamalières Cédex (FR)**

(56) Documents cités:
DE-A- 3 600 635          DE-A- 3 908 697
US-A- 5 042 892          US-A- 5 222 795

## Description

La présente invention est du domaine des fibres optiques et elle a plus particulièrement pour objet.une structure de fibre optique procurant une émergence latérale de la lumière, ainsi que des procédés d'obtention d'une telle structure. On entend par lumière, dans la suite de la description, tout rayonnement magnétique visible ou non, susceptible d'être véhiculé dans un milieu réfringent.

On rappelle qu'une fibre optique, qui est un guide-onde pour la lumière, est constituée d'un milieu translucide s'étendant dans une direction (fibre) et revêtu d'une couche d'un autre milieu translucide d'indice de réfraction différent. On sait que le moindre point de rupture de la couche externe provoquant sa destruction partielle, dite altération, est le siège d'une émergence lumineuse lorsqu'un flux lumineux est présent dans la fibre.

On connaît une autre technique pour faire émerger la lumière véhiculée dans une fibre optique, consistant à altérer la surface extérieure de celle-ci, la nature, la forme, et les dimensions des altérations ménagées étant déterminées en fonction de l'effet visuel extérieur recherché. On pourra notamment se reporter aux publications US 5222795 et US 5042892, dans lesquelles le revêtement de la fibre a été retiré pour faire émerger le flux lumineux à travers une surface continue s'étendant sur la longueur de la fibre, et DE 3600635, dans laquelle de nombreuses entailles transversales sont ménagées plus ou moins rapprochées sur le pourtour de la périphérie de la fibre, et pour un art antérieur plus éloigné, DE 3908697 qui propose une altération de la surface de la fibre optique, non pas par retrait du revêtement dont elle est pourvue à la manière divulguée dans les publications précédentes, mais par adjonction d'une colle transparente provoquant des fissures dans la fibre optique."

Le but de la présente invention est de proposer un traitement de fibre optique et une structure de fibre optique ainsi traitée, conférant à la fibre une luminosité quasi continue, avec un rapport entre le flux restitué latéralement et le flux entrant, proche de 100%, soit tout le long d'elle-même, soit seulement le long de certaines de ses parties, soit à fortiori le long de tout ou partie d'un faisceau composé d'une pluralité de fibres.

Selon la présente invention, une fibre optique, c'est-à-dire une fibre destinée à véhiculer un flux de lumière à partir d'une source lumineuse disposée à l'une, dite d'entrée, de ses extrémités jusqu'à une autre extrémité dite terminale, est du genre de celle décrite par DE 3600635, de forme sensiblement cylindrique, comportant sur au moins une certaine zone de sa surface extérieure de nombreuses altérations rapprochées de trés petites dimensions à travers lesquelles est destiné à émerger le flux lumineux véhiculé dans la fibre, altérations dont la densité superficielle D(x) varie suivant le sens de propagation du flux lumineux. Cette fibre optique est principalement caractérisée en ce les dites altérations sont conformées en cratères plus ou moins allongés, de très petites dimensions par rapport au diamètre de la fibre, chacune provoquant une émergence quasi ponctuelle de la lumière véhiculée dans la fibre. La densité superficielle D(x) des altérations varie, suivant le sens de propagation du flux lumineux, selon une loi de progression telle qu'en un point $i$ la densité $Di$ en ce point soit inversement proportionnelle au flux lumineux $\Phi i$ en ce point, soit $Di = K.1/\Phi i$. Il résulte de ces dispositions que le flux lumineux émergeant est sensiblement constant sur la longueur de la dite zone, et de ce fait que la luminescence de la fibre est globalement homogène.

De préférence la densité D(x) des altérations est en outre telle que le flux lumineux interne, à l'extrémité terminale de la fibre, soit négligeable.

Suivant une forme simplifiée de réalisation, la fibre ne comporte, entre son extrémité d'entrée et son extrémité terminale, qu'une seule zone d'altérations, la densité D(x) des altérations étant telle que le flux lumineux émergeant soit constant sur toute la zone; alternativement la fibre pourrait comporter plusieurs zones traitées séparées par des zones non traitées; des fibres de l'invention peuvent être goupées en faisceau, avec des zones traitées adjacentes, ce qui renforce l'effet de continuité de la luminosité.

Dans une variante, dite à double entrée, selon laquelle une fibre est alimentée en lumière par ses deux extrémités, la densité des altérations progresse depuis une extrémité jusqu'à une valeur maximale puis décroît dans la direction de l'autre extrémité.

On notera que si le caractère négligeable du flux sortant est un critère de reconnaissance de certaines fibre relevant de l'invention, il n'est cependant pas un critère absolu puisque d'autres fibres en relevant ne satisfont pas à ce critère : ainsi la fibre à double entrée; ainsi encore un tronçon de fibre, ou son équivalent tel qu'obtenu d'origine; ainsi encore une fibre de l'invention dont on aura souhaité qu'elle présente un flux résiduel à l'extrémité terminale.

Suivant un premier genre de procédé d'obtention d'une fibre de l'invention, le matériau constitutif pouvant être aussi bien minéral (verres, silice par exemple) qu'organique (matière plastique), l'opération de formation des altérations, grosso modo équivalente à un dépolissage, peut être une opération d'abrasion (mécanique), par exemple une opération de sablage avec une poudre de dureté appropriée à la dureté du matériau (corindon, quartz, etc..). dans le cas d'une fibre optique organique d'assez gros diamètre, le dépolissage peut résulter d'une opération de brossage, auquel cas les altérations se présentent sous la forme de rayures, croisées ou parallèles.

Suivant un second genre de procédé d'obtention d'une fibre de l'invention, le matériau de la fibre, et particulièrement celui de sa couche externe, étant susceptible d'agression chimique, le dépolissage peut résulter d'une pulvérisation d'un solvant sous forme d'aérosol qui modifie la structure de la couche externe de la fibre.

Les procédés susvisés s'appliquent aussi bien à une fibre proprement dite, de forme sensiblement cylindrique, qu'à une fibre de section polygonale, et ils sont également applicables à un tissu dont les fils, de trame par exemple, sont des fibres optiques, en notant que le sablage est avantageusement effectué sur le tissu lui-même, plutôt que sur les fibres avant tissage.

S'agissant d'une fibre à section carrée, le traitement pourra s'appliquer à une seule des faces de façon à grouper les émergences lumineuses sur celle-ci.

La présente invention sera mieux comprise, et des détails en relevant apparaîtront, à la description qui va en être faite en relation avec les figures des planches annexées, dans lesquelles:

- la fig.1 illustre une partie d'une fibre conforme à l'invention,
- la fig.2 est un détail agrandi de la figure précédente,
- la fig.3 est un diagramme illustratif d'une forme de répartition des altérations d'une fibre de l'invention,
- la fig.4 est un schéma illustratif d'un premier procédé d'obtention d'une fibre de l'invention,
- la fig.5 est un schéma illustratif d'un deuxième procédé d'obtention d'une fibre de l'invention,
- la fig.6 est un schéma illustratif d'un troisième procédé d'obtention d'une fibre de l'invention.

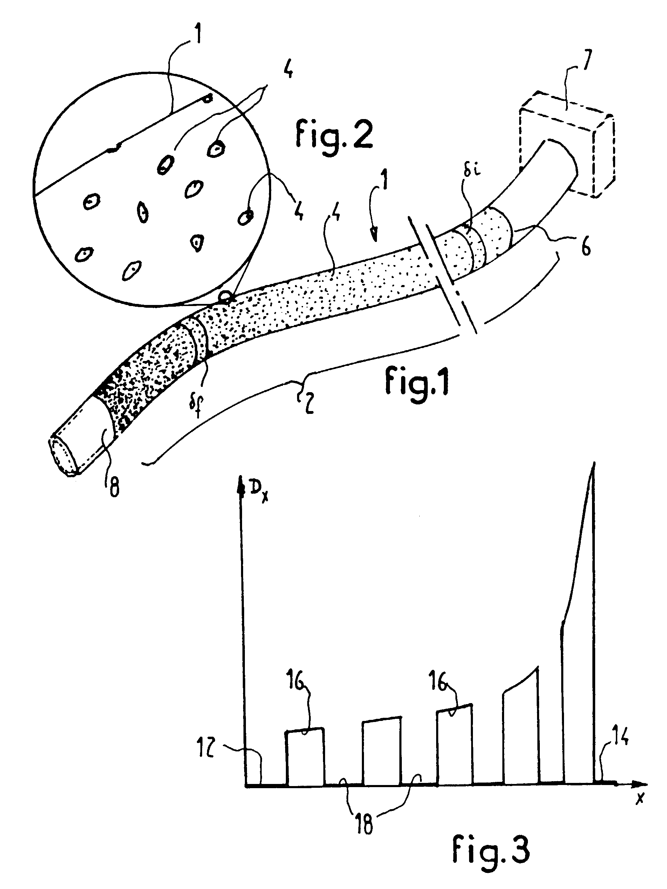

Sur la fig.1, une fibre optique 1, constituant une forme particulière de réalisation de l'invention, comporte sur une zone 2 de sa surface des altérations 4 de sa couche externe, dont la densité est croissante depuis une extrémité d'entrée 6, destinée à être proche d'une source lumineuse 7, jusqu'à une extrémité terminale 8; ainsi dans la surface élémentaire $\delta f$ les altérations sont beaucoup plus nombreuses que dans la surface élémentaire $\delta i$ plus proche de la source.

La variation du nombre d'altérations par unité de surface (densité superficielle), dans le cas d'espèce est donnée par le tableau suivant qui fournit pour chacune des dix parties successives d'une zone, le nombre d'altérations de chaque partie, en vue d'obtenir une luminosité émergente sensiblement constante le long de la zone.

TABLEAU

| 100 | 111 | 125 | 142 | 166 | 200 | 250 | 333 | 500 | 1000 |
|-----|-----|-----|-----|-----|-----|-----|-----|-----|------|

Sur la fig.2 il apparait que les altérations 4 de la fibre, étant obtenues par sablage, les dites altérations ont alors la forme de caractères plus ou moins allongés.

Sur la fig.3 le diagramme illustre la variation de la densité Dx d'une fibre depuis une extrémité d'entrée 12 jusqu'à une extrémité terminale 14, dans laquelle des zones luminescentes 16 alternent avec des zones obscures 18; cette figure renseigne aussi sur l'allure de la progression de la densité des altérations.

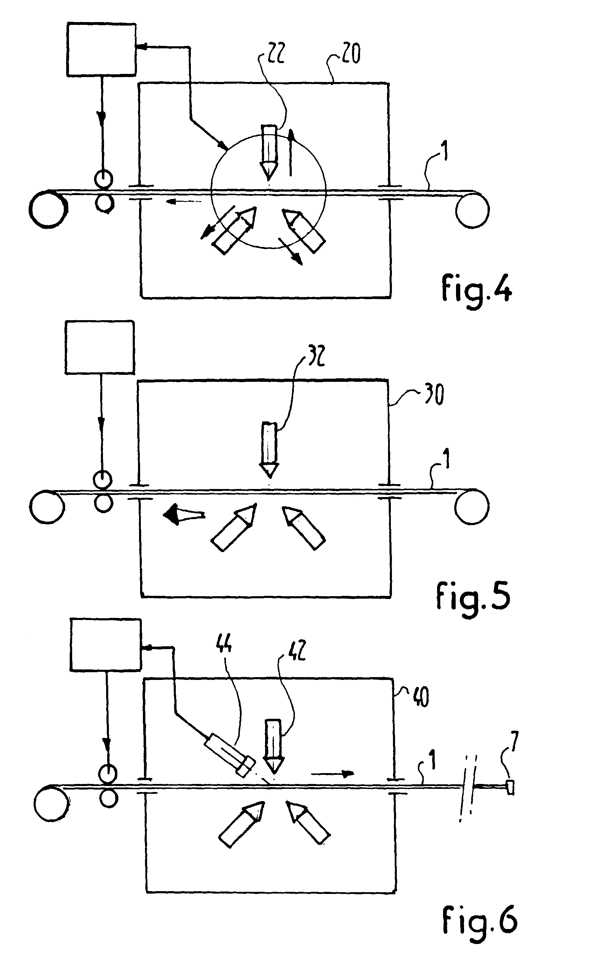

Le procédé de la fig.4 consiste à faire défiler à vitesse constante la fibre optique 1 dans une cabine de sablage 20 en regard d'au moins une buse telle que 22 dont l'alimentation est constante tant en quantité d'abrasif qu'en pression d'air comprimé, mais dont la distance à la fibre varie en fonction du défilement de la fibre. On notera que le traitement subi par une seule fibre, tel que représenté sur la figure, pourrait aussi bien être appliqué à une pluralité de fibres disposées côte à côte ou autrement disposées ou reliées, par exemple torsadées, tressées ou tissées.

Le procédé de la fig.5 consiste à faire défiler à vitesse variable la fibre optique 1 dans une cabine de sablage 30 en regard d'au moins une buse fixe telle que 32 dont l'alimentation est constante tant en quantité d'abrasif qu'en pression d'air comprimé. En tout état de cause la variation de la densité des altérations peut être contrôlée par la vitesse de défilement de la fibre ou d'éloignement de la buse, ou par la pression d'air comprimé ou par la quantité d'abrasif, ainsi que par la combinaison de ces facteurs

Les procédés qui viennent d'être décrits précèdent d'une détermination "à priori" des diverses cinématiques mises en oeuvre (vitesse d'éloignement des buses, vitesse de la fibre, accélération de la fibre) ; cette détermination est ensuite corrigée en fonction des résultats obtenus.

Le procédé de la fig.6 consiste à faire défiler la fibre optique 1 maintenue, par une source lumineuse 7, sous entrée de flux lumineux constant, dans une cabine de sablage 40 en regard d'au moins une buse telle que 42 fixe dont l'alimentation est constante tant en quantité d'abrasif qu'en pression d'air comprimé; dans ce procédé le défilement de la fibre est sous la dépendance d'une cellule photoélectrique 44 placée en regard de la zone de la fibre où s'effectue le sablage, la cellule ne commandant le défilement de la fibre que lorsque la lumière perçue par la cellule a atteintune certaine intensité. Ce dernier procédé a l'avantage de simplifier grandement l'approche "à priori" des procédés précédents.

L'un ou l'autre des procédés sus décrits permet de ne traiter qu'un seul côté de la fibre, que celle-ci ait une section circulaire ou une section polygonale, en conservant les mêmes résultats de répartition du flux lumineux.

La présente invention trouve des applications dans l'éclairage, par exemple éclairage de tableaux d'information, éclairage antidéflagrant, éclairage d'objets de musées, etc.., dans la décoration, dans la signalisation et le balisage, dans l'habillement de fantaisie et dans l'habillement de sécurité, dans l'ameublement, dans l'animation des salles de spectacles, des vitrines, des patinoires, cette énumération n'étant pas limitative.

De plus la fibre étant réversible, à savoir que si l'on éclaire la surface de la fibre on recueille du flux lumineux principalement à l'extrémité d'entrée, on peut l'utiliser comme capteur de lumière, ou comme antenne d'émission ou de réception infrarouge.

Comme cela a bien été précisé plus haut, la portée de l'invention n'est pas limitée aux seules fibres optiques ou faisceaux de fibres, mais elle s'étend aussi bien aux films qu'aux tissus incorporant des fibres optiques.

Bien que l'on ait décrit ou représenté des formes particulières de réalisation de l'invention, il doit être compris que la portée de cette dernière n'est pas limitée à ces formes, mais qu'elle s'étend aux définitions générales formulées plus haut.

## Revendications

1. Fibre optique, c'est-à- dire fibre destinée à véhiculer un flux de lumière à partir d'une source lumineuse disposée à l'une, dite d'entrée, de ses extrémités jusqu'à une autre extrémité dite terminale, la dite fibre étant de forme sensiblement cylindrique et comportant sur au moins une certaine zone (2) de sa surface extérieure de nombreuses altérations rapprochées de trés petite dimensions à travers lesquelles est destiné à émerger le flux lumineux véhiculé dans la fibre, altérations dont la densité superficielle D(x) varie suivant le sens de propagation du flux lumineux, caractérisée,

   en ce les dites altérations (4) sont conformées en cratères plus ou moins allongés, de trés petites dimensions par rapport au diamètre de la fibre, chacune provoquant une émergence quasi ponctuelle de la lumière véhiculée dans la fibre, leur densité superficielle D(x) variant, suivant le sens de propagation du flux lumineux, selon une loi de progression telle qu'en un point $i$ la densité Di en ce point soit inversement proportionnelle au flux lumineux $\Phi i$ en ce point, soit Di = K.1/ $\Phi i$,.

   d'où il résulte que le flux lumineux émergeant est sensiblement constant sur la longueur de la dite zone, et de ce fait que la luminescence de la fibre est globalement homogène ;

2. Procédé de préparation d'une fibre optique selon la revendication 1, caractérisé :

   en ce que les altérations sont obtenues par sablage, la fibre optique (1) défilant dans une cabine de sablage (30) devant au moins une buse de projection (32) ;

3. Procédé selon la revendication 2, caractérisé :

   en ce que la dite variation de densité des altérations est obtenue par une variation de l'un quelconque au moins des facteurs du groupe des facteurs comprenant la vitesse de défilement de la fibre, l'accélération de la fibre, la distance de la buse à la fibre, la vitesse d'éloignement de la buse, la pression d'air comprimé pour la projection de l'abrasif, et la quantité d'abrasif ;

4. Procédé selon la revendication 3, caractérisé :

   en ce qu'il consiste à faire défiler la fibre optique maintenue, par une source lumineuse (7), sous entrée de flux lumineux constant, le défilement de la fibre étant sous la dépendance d'une cellule photoélectrique (44) placée en regard de la zone de la fibre où s'effectue le sablage ;

5. Fibre optique selon la revendication 1 , caractérisée :

   en ce que la densité D(x) des altérations est en outre telle que le flux lumineux interne, à l'extrémité terminale de la fibre, soit négligeable;

6. Fibre optique selon la revendication 1 , caractérisée :

   en ce qu'elle ne comporte, entre son extrémité d'entrée et son extrémité terminale, qu'une seule zone d'altérations, la densité D(x) des altérations étant telle que le flux lumineux émergeant soit constant sur toute la zone;

7. Fibre optique selon la revendication 1 , caractérisée :

   en ce qu'elle comporte plusieurs zones traitées séparées par des zones non traitées;

8. Procédé de préparation d'une fibre optique selon la revendication 1, caractérisé :

   en ce que les dites altérations sont obtenues par attaque d'un solvant sous forme d'aérosol.

9. Procédé de préparation d'une fibre optique selon l'un quelconque des procédés 2 et 8 caractérisée

en ce qu'il est appliqué à une pluralité de fibres disposées côte à côte, reliées, torsadées, tressées ou tissées.

## Claims

1. Optical fibre, i.e. fibre intended to transmit a flux of light from a light source at one end thereof, known as the input end, to another end thereof known as the terminal end, the said fibre being essentially of cylindrical shape and having over at least a certain area (2) of its outer surface numerous irregularities of very small dimensions close together, the said irregulanties being intended to allow escape of the light flux carried by the fibre, and the surface density of the said irregularities D(x) varying along the propagation direction of the light flux,
   **characterized in that**
   the said irregularities (4) have the shape of more or less elongated pits whose dimensions are very small relative to the diameter of the fibre, each of them allowing the escape, virtually at a point, of the light carried by the fibre, their surface density D(x) varying along the propagation direction of the light flux in accordance with a progression law such that at a point $i$ the density $Di$ at the said point is inversely proportional to the luminous flux $\Phi i$ at that point, i.e.

$$Di = K.(1/\Phi i)$$

   with the result that the light flux emerging is essentially constant along the length of the said area, and consequently, that the luminescence of the fibre is essentially homogeneous.

2. Process for the production of an optical fibre according to Claim 1,
   **characterized in that**
   the irregularities are obtained by sand-blasting, with the optical fibre (1) passing through a sand-blasting cabinet (30) in front of at least one blasting nozzle (32).

3. Process according to Claim 2,
   **characterized in that**
   the said variation in the density of the irregularities is obtained by varying at least one of the factors belonging to the group of factors that comprises the speed at which the fibre is moving, the acceleration of the fibre, the distance of the nozzle from the fibre, the speed at which the nozzle is withdrawn, the pressure of the compressed air used to project the abrasive, and the quantity of abrasive used.

4. Process according to Claim 3,
   **characterized in that**
   it consists in causing the optical fibre to move along while a constant flux of light from a light source (7) is being passed into it, the movement of the fibre being controlled by a photoelectric cell (44) positioned opposite the area of the fibre undergoing sand-blasting.

5. Optical fibre according to Claim 1,
   **characterized in that**
   the density D(x) of the irregularities is in addition such that the internal luminous flux at the terminal end of the fibre is negligible.

6. Optical fibre according to Claim 1,
   **characterized in that**
   between its input and terminal ends, it comprises no more than one area with irregularities, the density D(x) of the irregulanties being such that the luminous flux emerging is constant over the entire area in question.

7. Optical fibre according to Claim 1,
   **characterized in that**
   it comprise several treated areas separated by areas that have not been treated.

8. Process for the production of an optical fibre according to Claim 1,
   **characterized in that**
   the said irregularities are obtained by the attack of a solvent applied in aerosol form.

9. Process for the production of an optical fibre according to any of the processes 2 and 8,
**characterized in that**
it is applied to a plurality of fibres arranged side by side, connected, twisted together, braided, or woven.

**Patentansprüche**

1. Optische Faser, d.h. Faser zum Leiten eines Lichtflusses, ausgehend von einer Lichtquelle, die am sogenannten Eingangsende angeordnet ist, bis zu einem sogenannten Terminalende, wobei die Faser von im wesentlichen zylindrischer Gestalt ist und auf ihrer Außenfläche wenigstens über eine gewisse Zone (2) zahlreiche nahe beieinanderliegende Veränderungen sehr kleiner Abmessungen aufweist, durch welche der in der Faser geleitete Lichtfluß austritt und deren Oberflächendichte D (x) im Fortpflanzungssinne des Lichtflusses variiert, dadurch gekennzeichnet, daß die genannten Veränderungen (4) die Gestalt von mehr oder weniger langgestreckten Kratern aufweisen von in Bezug auf den Durchmesser der Faser kleinen Abmessungen, deren jeder ein praktisch punktförmiges Austreten des in der Faser geleiteten Lichtes hervorruft, daß die Oberflächendichte D (x) im Sinne der Fortpflanzung des lichtflusses entsprechend einem Fortpflanzungsgesetz derart variiert, daß die Dichte D (i) an einem Punkt $i$ entweder umgekehrt proportional dem Lichffluß $\phi i$ an diesem Punkt oder $= K.1/\phi\ i$ ist, woraus sich ergibt, daß der austretende Lichtfluß über die Länge der gesamten Zone im wesentlichen konstant ist und daß demgemäß die Lumineszenz der Faser im wesentlichen gleichförmig ist.

2. Verfahren zum Herstellen einer optischen Faser nach Anspruch 1, dadurch gekennzeichnet, daß die Veränderungen durch Sandstrahlen erzielt werden, und daß die optische Faser (1) eine Sandstrahlkabine (30) vor wenigstens einer Strahldüse (32) durchläuft.

3. Verfahren nach Anspruch 2, dadurch gekennzeichnet, daß die genannte Änderung der Dichte der Veränderungen durch eine Variation irgendeines Faktors erzielt wird aus der Reihe von Faktoren, umfassend die Wandergeschwindigkeit der Fasern, die Beschleunigung der Faser, den Abstand der Düse zur Faser, die Geschwindigkeit des Entfemens der Düse, den Luftdruck für das Ausstoßen des abrasiven Mittels sowie die Menge des abrasiven Mittels.

4. Verfahren nach Anspruch 3, dadurch gekennzeichnet, daß man die optische Faser an einer Lichtquelle (7) unter dem Eintritt eines konstanten Lichtflusses vorbeiwandem läßt, und daß das Vorbeiwandem der Faser in Abhängigkeit von einer photoelektrischen Zelle (44) vonstatten geht, die jener Zone der Faser gegenüberliegt, wo die Sandstrahlung stattfindet.

5. Optische Faser nach Anspruch 1, dadurch gekennzeichnet, daß die Dichte D (x) der Veränderungen u. a. derart gewählt ist, daß der innere Lichtfluß am Terminalende der Faser vernachlässigbar ist.

6. Optische Faser nach Anspruch 1, dadurch gekennzeichnet, daß sie zwischen dem Eingangsende und dem Terminalende nur eine einzige Zone von Veränderungen aufweist, und daß die Dichte D (x) der Veränderungen derart gewählt ist, daß der austretende Lichtfluß über die gesamte Zone konstant ist.

7. Optische Faser nach Anspruch 1, dadurch gekennzeichnet, daß sie mehrere behandelte Zonen aufweist, getrennt von nichtbehandelten Zonen.

8. Verfahren zum Herstellen einer optischen Faser nach Anspruch 1, dadurch gekennzeichnet, daß die genannten Veränderungen durch Anwenden eines Lösungsmittels in Form von Aerosol erzeugt werden.

9. Verfahren zum Herstellen einer optischen Faser nach einem der Ansprüche 2 oder 8, dadurch gekennzeichnet, daß eine Vielzahl von Fasern angewandt wird, die nebeneinanderliegen, miteinander verbunden, gekordelt, geflochten oder verwoben sind.

fig.2

fig.1

fig.3

fig.4

fig.5

fig.6